# EUROPEAN PATENT SPECIFICATION

(11) **EP 1 296 837 B1**
(45) Date of publication and mention of the grant of the patent: **10.03.2010**
(21) Application number: 00978111.3
(22) Date of filing: 03.11.2000
(51) Int. Cl.: B41M 5/26, C08K 9/10, C08J 3/00

(54) **LASER-MARKABLE POLYMER COMPOSITION**
LASERMARKIERBARE POLYMERZUSAMMENSETZUNGEN
COMPOSITION POLYMERE MARQUABLE AU LASER

(30) Priority: 23.11.1999 NL 1013644
(43) Date of publication of application: 02.04.2003
(73) Proprietor: Merck Patent GmbH, 64293 Darmstadt (DE)
(72) Inventor: VAN DIJK, Saskia, Ingeborg, NL-6215 JC Maastricht (NL); VAN DUIJNHOVEN, Frank, NL-5704 AT Helmond (NL); GELISSEN, Franciscus, Wilhelmus, Maria, 52538 Selfkant (DE); UDDING-LOUWRIER, Saskia, NL-8016 AB Zwolle (NL); BOLINK, Hendrik, Jan, NL-6221 JH Maastricht (NL)
(74) Representative: Schoen, Sabine
(86) International application number: PCT/NL2000/000799
(87) International publication number: WO 2001/038103

(56) References cited:
- EP-A- 0 190 997
- EP-A- 0 644 234
- DE-A- 4 402 363

## Description

The invention relates to a polymer composition with improved laser markability, containing a polymer matrix material and at least one radiation-sensitive dye, and to a method for preparing the polymer composition. The invention also relates to a product wholly or partially manufactured from said polymer composition, to a method for applying a marking to such a product by means of irradiation with laser light, and to the marked product thus obtained.

Such a polymer composition is known from patent publication EP-B-0190997. This document describes a method for marking an object from high-molecular organic material by irradiating it with laser light, wherein various radiation-sensitive colorants are used as additives causing discolouration.

Within the framework of this invention a radiation-sensitive colorant is understood to be a colorant that can change colour under the influence of radiation, for example light with a wavelength in the near UV and/or visible and/or near IR range, originating for example from a laser. Colour change is here understood to be a change of the absorption spectrum in the UV/VIS range, so that under incident visible or UV light a change can be observed, for example the obtaining of another colour, losing colour (bleaching) or forming colour from an (almost) colourless state.

Colorants are usually classified into the following three categories: inorganic pigments, organic pigments and dyes (or solvent dyes). The characterising difference between pigments and dyes is the difference in solubility. Pigments are virtually insoluble in the medium in which they are used, also under processing conditions. They consist of solid crystalline particles that must be dispersed in the polymer in a physical/mechanical way. The colour of a pigment is not only dependent on molecular structure, but also on crystal structure and morphology. The colour of a polymer/pigment composition is therefore dependent on the quality of the dispersion. Pigment particles also often affect the mechanical properties of a composition, and can for example cause a reduction in the impact strength. Pigments generally exhibit a good light-fastness and a low migration tendency.

Dyes on the other hand are compounds that are soluble under the processing conditions and/or conditions of use. They commonly show an intrinsic affinity with a polymer substrate, and can for example adsorb to a substrate from a solution. Dyes can mix with polymers on a molecular scale, and as a result they can give clear and transparent coiours, with high colour intensity. In certain cases dyes are therefore preferred to pigments.

Although the solubility is dependent on both the medium (polymer) and the conditions, existing colorants are generally still classified in the group of pigments or in the group of dyes (see for example pp. 944-964 in Kirk-Othmer Encyclopaedia of Chemical Technology, 4th Ed., Vol. 6, John Wiley & Sons, New York, 1993, ISBN 0-471-52674-6). Within the framework of this patent application dyes are understood to be colorants that dissolve in the polymer at least up to a concentration of approximately 0.1 wt.%, in particular 0.2 wt.%, and even more in particular 0.3 wt.%, depending on the dye/polymer combination.

In EP-B-190997 use is made in particular of at least an inorganic pigment and/or an organic pigment, or a polymer-soluble dye in combination with fillers and/or pigments. The disadvantage of the known method from EP-B-190997 for laser marking is that when a dye is used as radiation-sensitive colorant in many cases no or only a very small contrast is obtained, unless a filler and/or pigment is also added. The addition of a filler has the disadvantage that other properties can also be affected without this being intended.

The poor laser markability of polymer compositions with dyes is also clear from for example EP-A-0327508, wherein dyes are used as non-radiation-sensitive colorants in combination with radiation-sensitive azo pigments.

A problem from practice is furthermore that a particular radiation-sensitive dye can result in good laser markability in one polymer matrix material, whereas in another polymer matrix material it does not give good laser markability at all. Good laser markability is understood to mean that a marking of adequate contrast results from irradiating a surface with suitable laser light, i.e. a marking of different colour or colour hue than and visibly distinct from its background.

The aim of the invention is to provide a polymer composition that contains at least one radiation-sensitive dye, which polymer composition does have good laser markability.

The inventors have surprisingly achieved this aim because the polymer composition contains at least one dye that can change colour via a pnoto thermal process by irradiation with laser light and that is present in concentrated form is separate domains.

This result is surprising, it being generally accepted that pigments exhibit a lower sensitivity to radiation, i.e. a better light-fastness, relative to soluble dyes due to their intrinsic particle shape (see for example pp. 944-964 of the above-mentioned Kirk-Othmer Encyclopaedia of Chemical Technology).

An advantage of the composition according to the invention is the larger number of colorants suitable for the purpose, because besides radiation-sensitive pigments now also a large variety of radiation-sensitive dyes, which can change colour via a photo-thermal process, can be used to obtain a polymer composition with good laser markability. An additional advantage of the polymer composition according to the invention is that it is not necessary to add other compounds to obtain a good laser markability, such as for example fillers and/or pigments according to the method from EP-B-0190997, or for example an IR-absorbing compound according to the method from patent US-A-4663518. In a preferred embodiment the polymer composition according to the invention contains no specific auxiliary materials for improvement of the laser markability. Another advantage is that a smaller quantity of usually expensive dye suffices, because a high concentration in separate domains is sufficient instead of in the entire matrix.

A photo-thermal process is here understood to be a process in which a compound absorbs light of a particular wavelength, so that a thermally induced change in molecule conformation or structure of the compound results. This change can often be brought about also by a temperature increase through direct heat supply, and can be either reversible or irreversible.

The domains in which the dye is present in concentrated form can be very different in character and in origin. The dye can be present in almost pure form in the domains, for example in the form of crystals, but also in diluted form, for example in a mixture with another compound, including another polymer.

In a preferred embodiment the polymer composition contains domains that substantially consist of dye particles, because the polymer composition contains more dye that is soluble in the polymer matrix material under the conditions of use and/or the processing conditions.

In another embodiment of the invention the domains in which the dye is present in concentrated form consist of previously made particles that contain the dye, which particles do not dissolve in the polymer matrix material, but are dispersed in it. Particularly suitable are for example encapsulated particles of the desired dimensions that contain the dye, for example so-called microcapsules. Such (micro)capsules can be prepared in known ways, as described inter alia in the relevant chapter in Kirk-Othmer Encyclopaedia of Chemical Technology, 4th Ed., Vol. 16, John Wiley & Sons, New York, 1995, ISBN 0-471-52685-1, and the references cited there. An advantage of the use of encapsulated dye particles is that the solubility is not or hardiy dependent on the polymer matrix material in which, or the conditions under which, they are dispersed. Another advantage is that other compounds can also be added to the particles, provided that the dye concentration in the particles is such that the laser markability remains satisfactory, and no other negative effects result. In this way the often-costly dye can be diluted with a cheaper compound. A positive effect can also be obtained by adding for example an IR-absorbing compound or another compound to the dye, so that the laser markability is further improved.

Another suitable example of such 'insoluble' encapsulated dye particles is a cured thermosetting polymer composition containing the dye that has been ground to the desired particle size. This cured thermosetting polymer composition contains such a concentration of dye that laser irradiation of this composition results in the desired colour change.

In another suitable embodiment according to the invention the domains consist of a dispersed phase of a phase-separated polymer composition, for example the result of a phase separation process between the polymer that forms the continuous phase in the polymer matrix material and another component that is not miscible with this polymer. This other component is preferably another polymer. Mixtures of two or more polymers generally exhibit a heterogeneous or multi-phase morphology, one polymer usually being dispersed in a continuous phase of the other polymer. The dye is present in concentrated form in this dispersed phase. The concentration of the dye in these domains is such that laser irradiation of a product containing the composition of this dispersed phase results in the desired colour change. This concentration can be determined by one skilled in the art via simple experiments.

The dimensions of the separate domains in which the dye is present in the polymer composition according to the invention can in principle vary within broad limits. To obtain a good contrast the minimum average cross-section of the domains is approximately 0.01 micrometer (µm), more preferably approximately 0.1 µm, and most preferably approximately 0.5 µm. The average cross-section is preferably not larger than 200 µm, and more preferably not larger than approximately 90 µm, so that no particles or surface defects perceptible with the eye are formed on a product manufactured from the polymer composition.

Examples of suitable radiation-sensitive dyes that can change colour via a photo-thermal process by irradiation with laser light are compounds from the groups of azo dyes and metal complexes thereof, anthraquinone, xanthene, perinone, methine and azine dyes, such as described inter alia in WO 94/12352.

A very suitable class of radiation-sensitive dyes is the group of so-called 'latent pigments', which are for example described in a publication in Nature, Vol. 388, p. 377 (1997), and in the patent specifications US-A-5484943 and US-A-5561232 that are cited therein. A latent pigment is defined as a soluble dye, obtained by chemical modification from an organic pigment, that can be reconverted into an insoluble pigment under the influence of energy supply, heat and/or radiation. Because both forms, soluble dye and insoluble pigment, exhibit a different light absorption spectrum, this conversion is attended by a colour change. An example of such a compound is N,N'-bis-(*t-*butoxycarbonyl)-3,6-diphenyl-1,4-diketo-pyrrolo[3,4-C] pyrrole, which is converted from a yellow dye into a red pigment (DPP, or Cl Pigment Red 254, see the above-mentioned article in Nature) by splitting off of the *t-*butoxycarbonyl groups. By changing the chemical structure of the DPP unit by means of different substituents, the (colour) properties of the pigment can be influenced. By varying the chemical structure of the protective group, the solubility and the melting point of the dye can be changed. A large apolar protective group may for example result in a relatively low melting point, and good solubility in apolar polymers. The advantage of such latent pigments is that they have a well-defined transition point, a clear colour change, and a stable final form, resulting in for example good light-fastness.

The radiation-sensitive dye can in principle be used in a wide concentration range, depending amongst other things on the solubility in the polymer matrix material. The polymer composition according to the invention normally contains 0.001-25 wt.% of dye. For sufficient colour and contrast the polymer composition preferably contains more than 0.01 wt.%, and more preferably more than 0.1 wt.% dye. For cost considerations preferably not more than 10 wt.% is used, and more preferably not more than 5 wt.% dye. The optimum quantity of dye depends amongst other things on the thickness of the object or the layer containing the polymer composition according to the invention to which the marking is applied.

The concentration of dye in the separate domains is in general clearly higher than in the matrix (or in the polymer composition). If the domains consist mainly of the dye, for example as crystals, the concentration in general is higher than 70 wt.%, preferably higher than 80 wt.%, and more preferably higher than 90 wt.%. If in addition to the dye also one or more other components are present in the domains, the concentration is chosen so that the dye molecules locally develop so much heat due to absorption of energy in the form of laser light that the temperature required for the thermally induced change in conformation or structure is reached, and thus the desired colour change is achieved, and this heat is not largely dissipated. This concentration can be determined by a person skilled in the art via simple experimentation. Preferably the concentration of the dye in the domains is higher than the solubility of the dye in the domains.

As polymer matrix material the polymer composition according to the invention may in principle contain any polymer or mixture of polymers known to one skilled in the art. Use may be made of thermoplastics, thermosetting plastics, elastomers as well as biopolymers. Suitable examples are given inter alia in WO 94/12352.

Preferably a polymer is chosen that can be processed at a temperature that is lower than the temperature at which the dye changes colour, this is particularly relevant if this change is irreversible. For thermoplastic polymers the processing temperature is the temperature at which the polymer is processed in the melt phase, for a thermosetting polymer this is usually the temperature at which the polymer composition is cured. In a special embodiment the polymer matrix material is a polymer that can be cured by means of irradiation, so that the temperature can remain relatively low. Suitable examples of such polymer matrix materials are for example UV-curable polymers, and in particular UV-curable powder paint binder compositions, which are described inter alia in RadTech Report, Sept/Oct 1996, pp. 13-17, and the publications cited therein.

The polymer composition may further also contain one or more of the customary additives, such as fillers and reinforcing agents for improvement of for example mechanical properties, stabilisers, processing aids, flame retardants, dispersion agents etc. If desired the polymer composition also contains one or more colorants that are not radiation-sensitive for the laser light used.

If desired the polymer composition according to the invention may also contain one or more radiation-sensitive pigments. An advantage of a polymer composition that contains several radiation-sensitive colorants is the possibility to apply a multicolour marking, as for example described in the patent specifications WO 96/35585 and WO 98/19868.

The invention also relates to a method for preparing a polymer composition with improved laser markability, by mixing the polymer matrix material, the radiation-sensitive dye and if desired other components under such time and temperature conditions that no thermally irreversible colour change occurs in the dye, wherein dissolution of the normally soluble dye in the polymer matrix material being inhibited so that the dye is ultimately concentrated in separate domains.

For preparing the polymer composition according to the invention use may be made of methods that are known to one skilled in the art for mixing of the components, including the encapsulated or non- encapsulated dye, for example by mixing with the aid of a roller, an extruder, or other mixing or kneading equipment. It is for example also well possible to mix the components of the polymer composition in a solution, a suspension or an emulsion.

In a preferred embodiment of the method according to the invention the domains are formed because more dye is added than is soluble in the polymer matrix material under the conditions of use and/or processing. Preferably the processing temperature (mixing temperature) is lower than the melting temperature of the dye, because otherwise a homogeneous system can readily form owing to the greater solubility of melted dye in the polymer melt. If too much dissolution of the dye still occurs, the mixture may be subjected to a particular temperature programme, for example by slowly cooling down to the conditions of use or by tempering at a temperature below the melting temperature of the dye, so as to again bring about demixing so that the dye separates due to for example crystallisation into separate domains.

Another embodiment is the method in which domains are formed by a phase separation process between the polymer matrix material and at least one component that is non-miscible or non-compatible therewith, preferably a second polymer, and in which the dye is present in concentrated form in a dispersed phase of the second polymer. In a suitable embodiment the dye is mixed beforehand with a second polymer, after which the resulting mixture is dispersed in the matrix material. The dye is preferably present in dispersed form in the second polymer.

In another suitable embodiment of the method according to the invention the dye, which is well soluble in the matrix polymer, is given the form of 'insoluble' dye particles by encapsulation in for example microcapsules or dispersed in a cured thermosetting polymer, and subsequently mixed with the polymer matrix material, the particles not 'breaking', dissolving or melting during the mixing.

The polymer composition according to the invention can be used in the customary ways for the production of a product, that consists wholly or partially of the polymer composition, for example by injection moulding or extrusion, or for the application of a thin layer to a substrate, which may comprise different materials, for example plastic, metal, wood, paper and the like. In doing so account should be taken of the stability of the dye chosen so as to ensure that no fully or partly irreversible conversion of this dye takes place under the influence of heat already during production of the product. In a suitable embodiment the polymer composition is processed according to the invention via a solution, emulsion or suspension. In a particularly suitable embodiment of the method according to the invention a laser-markable coating is applied to a substrate by curing a paint, for example a powder paint that contains the polymer composition according to the invention with the aid of radiation, preferably UV radiation. The advantage of such a method is that the temperature can remain relatively low, so that more dyes can be used according to the invention.

The invention also relates to a method for applying mono- or multi-coloured markings to a product by irradiating a surface in the form of the marking with laser light of at least one wavelength, the object consisting of the polymer composition according to the invention at least at the surface area where the marking is applied.

In the method according to the invention it is possible to write directly on the surface in the form of lines or points by making use of a laser, if desired a 'pulsed' laser, with a so-called writing head, or masks can be used. Suitable are lasers that emit radiation with a wavelength in the UV or visible range. Preferably radiation is used with a wavelength that corresponds to or is near to the absorption maximum of the dye, especially if the concentration of the dye is relatively low. If the polymer composition contains more than one radiation-sensitive colorant, several colours can be obtained, by for example irradiating with laser light of different wavelengths. In principle the known methods for marking by means of irradiation with laser light may be used, such as for example described in the previously mentioned patent specifications.

The invention also relates to a marked product that consists of the,polymer composition according to the invention at least at the place where the marking is applied and that is provided with a single or multi-coloured marking in the way described above.

The invention will now be elucidated on the basis of the following non-limiting examples and comparative experiments.

Unless otherwise stated, in these examples the laser markability of the compositions was assessed by irradiating the surface of a sample made from the described composition with the following lasers: 355 nm A 1.5 W Nd.YAG UV laser of Lasertec Systems B.V. (NL), diode-pumped; wavelength 355 nm; set at 99% of the maximum power: pulse frequency 3-5 kHz; 300-800 dpi in the x- and y-directions. The markings were made with the surface of the sample in focus. In focus the beam diameter is approx. 35 micrometers. 532 nm A VectorMark® Compact 532nm (5W) Nd:YAG laser of the firm Haas-laser (DE), diode-pumped. The following settings were used in the experiments (unless otherwise stated): power set to 90% of the maximum power; pulse frequency 3 kHz; 300-800 dpi in the x- and y-directions, the markings were made with the surface of the sample in focus. In focus the beam diameter is approx. 35 micrometer.

The presence of dye particles in the samples, and their average size, was investigated by means of optical microscopy and/or transmission electron microscopy (with a Philips CM200 TEM, acceleration voltage 120 kV, on 70 nm films obtained at -120°C from samples embedded in epoxy resin).

In the examples and comparative experiments use was made of the latent pigments collected in Table 1. These dyes are described in patent specifications US-A-5484943 and US-A-5561232, and were obtained from Ciba (CH). Table 1 also gives the melting temperature of the dye (Tₘ), determined as the temperature of the melting peak in a DSC measurement. (Mettler DSC 30, TC15 TA Controller, Mettler Toledo Star® System (Software Version 6.0), measuring range: 30°C up to 400°C, 10°C/min, N₂ atmosphere (10 ml/min). The colour change point (To) was determined at the onset temperature of the exothermic peak in the same DSC measurement

**Table 1. Overview of 'latent pigments' used**

| Code | Name | Tₘ (°C) | Tₒ (°C) |
|---|---|---|---|
| LP Red 974A | 3,6-Biphenyl-1,4-dioxo-1H,4H-pyrrolo[3,4-c]pyrrole-2,5-dicarboxylic acid bis-(1-butyl-pentyl)ester | 112 | 262 |
| LP Red 502A | 3,6-Bis-(4-chlorophenyl)-1,4-dioxo-1H,4H-pyrrolo[3,4-c]pyrrole-2,5-dicarboxylic acid bis-(1,1-dimethyl-propyl)ester | 170 | 190 |
| LP Red 1106A | 3,6-Bis-(4-chlorophenyl)-1,4-dioxo-1H,4H-pyrrolo[3,4-c]pyrrole-2,5-dicarboxylic acid bis-(1-propyl-butyl)ester | 160 | 255 |
| LP Red 1110A | 3,6-Bis-(4-chlorophenyl)-1,4-dioxo-1H,4H-pyrrolo[3,4-c]pyrrole-2,5-dicarboxylic acid bis-(1-isopropyl-2-methyl-propyl)ester | 264 | 264 |
| LP Red 1128A | 3,6-Bis-(4-chlorophenyl)-1,4-dioxo-1H,4H-pyrrolo[3,4-c]pyrrole-2,5-dicarboxylic acid diisopropylester | 231 | 265 |
| LP Red 1131 A | 3,6-Bis-(4-chlorophenyl)-1,4-dioxo-1H,4H-pyrrolo[3,4-c]pyrrole-2,5-dicarboxylic acid bis-(1-ethyl-propyl)ester | 204 | 256 |
| LP Red 1133A | 3,6-Bis-(4-chlorophenyl)-1,4-dioxo-1H,4H-pyrrolo[3,4-c]pyrrole-2,5-dicarboxylic acid dicyclopentylester | 208 | 240 |
| LP Red 983A | 3,6-Bis-(4-chlorophenyl)-1,4-dioxo-1H,4H-pyrrolo[3,4-c]pyrrole-2,5-dicarboxylic acid bis-(1-butyl-pentyl)ester | 123 | 247 |
| LP Red 1167A | 3,6-Bis-(4-chlorophenyl)-1,4-dioxo-1H,4H-pyrrolo[3,4-c]pyrrole-2,5-dicarboxylic acid bis-(1-methyl-butyl)ester | 130 | 249 |
| LP Red 1105A | 3,6-Bis-(4-chlorophenyl)-1,4-dioxo-1H,4H-pyrrolo[3,4-c]pyrrole-2,5-dicarboxylic acid bis-(1-methyl-hexyl)ester | 120 | 261 |
| LP Red 1544A | 3,6-Biphenyl-1,4-dioxo-1H,4H-pyrrolo[3,4-c]pyrrole-2,5-dicarboxylic acid bis-(1-ethyl-propyl)ester | 137 | 261 |
| LP Red 1548A | 3,6-Bis-(4-chlorophenyl)-1,4-dioxo-1H,4H-pyrrolo[3,4-c]pyrrole-2,5-dicarboxylic acid bis-(1,2-dimethyl-propyl)ester | 176 | 230 |
| LP Blue 1632A | Carbonic acid 3'-(1-propyl-butoxycarbonyloxy)-1H,1'H-[2,2']biindolyl-3-yl ester 1-propyl-butyl ester | 179 | * |

| | | | |
|---|---|---|---|
| *: No clear exothermic peak. | | | |

### Example I

A 10 wt.% solution of polymethylmethacrylate (PMMA, Vink Kunststoffen, NL, M_{w} 80,000) in dichloromethane, which contains 23 wt.% (relative to PMMA) LP Red1131A, was poured out in a petri dish, after which the solvent was removed in an oven under reduced pressure at a temperature that rose to a maximum of 130°C A clear yellow film was obtained in which yellow crystals were visible, dimension approx. 150 µm. Laser irradiation at 355 and 532 nm resulted in a red marking.

### Comparative experiment A

Analogously to Example I a film was made containing 10 wt.% LP Red 1131A. The film was clear, yellow, and strongly fluorescent, and was found to be not laser-markable at 355 and 532 nm. No particles could be observed with the aid of optical microscopy.

Heating of the film for 10 minutes to approx. 220°C caused its colour to change into red.

### Example II

With the aid of a Brabender kneader (volume around 30 cm³_{;} Banbury kneading elements) 1 wt.% LP Red 1131 A was mixed into PE-LLD (Exact® 2M073 of DEX Plastomers, NL) for 5 minutes at 50 rpm and 100°C, after which the composition was quickly cooled to room temperature. The resulting mass was moulded into a number of films, the thickness ranging from approx. 0.1 to 2 mm (press of Fonteijne (NL); platen temperature approx. 100°C, mould pressure 5 MPa, for 5 minutes).

It was found that red markings were obtained on the yellow samples by irradiation with laser light of 355 nm, or of 532 nm. With the aid of optical microscopy needle-shaped particles with an average length of approximately 20 µm were observed in the composition before laser irradiation.

### Example III

Analogously to Example II a composition was made at 140°C. It was found that red markings were obtained on the yellow film by irradiation with laser light of 355 nm or of 532 nm. With the aid of optical microscopy needle-shaped particles with an average length of approximately 10 µm were observed in the film before laser irradiation.

### Example IV

Analogously to Example II a composition was made at 160°C. It was found that red markings that were just visible were obtained on the yellow film by irradiation with laser light of 355 nm or 532 nm With the aid of TEM needle-shaped particles with an average length of approximately 0.1-1 µm were observed in the film before laser irradiation.

### Example V

The sample from Example IV was reheated to 160°C and subsequently slowly cooled at approximately 1°C/min. It was found that now clear red markings were obtained on the yellow film by irradiation with laser light of 355 nm or 532 nm. With the aid of optical microscopy needle-shaped particles were observed with an average length of approximately 5 µm were observed in the film after the heat treatment and before laser irradiation.

### Comparative experiment B

Analogously to Example II a composition was made at 100°C, but with 0.1 wt.% LP Red 1131 A. The resulting yellow film proved to be not laser-markable at 355 or 532 nm. No particles could be observed with the aid of optical microscopy.

### Example VI

Analogously to the method of Example II a composition was made at 100°C of 1 wt.% LP Red 1106A in PE-LLD. It was found that red markings were obtained on the yellow film sample by irradiation with laser light of 355 nm or 532 nm. With the aid of optical microscopy needle-shaped particles with an average length of approximately 10 µm were observed in the film before laser irradiation.

### Comparative experiment C

Analogously to Example VI a composition was made at 160°C. The yellow film proved to be not laser-markable at 355 or 532 nm. With the aid of optical microscopy no particles could be observed.

### Comparative experiment D

Analogously to Example VI a composition was made with 0.2 wt.% LP Red 1106A. The yellow film proved to be not laser-markable at 355 or 532 nm. No particles could be observed with the aid of optical microscopy.

### Example VII

Analogously to the method of Example II, at 100°C compositions were made in PE-LLD of each time 1 wt.% LP Red 502A,LP Red 1110A, LP Red 1128A, LP Red 1133A, LP Red 1548A and LP Blue 1632A. The melting points and colour change points of these dyes are all well above the mixing and processing temperatures. All film samples proved to be laser-markable at 355 nm and at 532 nm. Red markings were obtained on a yellow background, except for the sample LP Blue 1632A, where blue markings were obtained on a light coloured or colourless background.

### Comparative experiment E

Analogously to the method of Example II, at 100°C compositions were made in PE-LLD of 1 wt.% LP Red 974A, LP Red 1162A, LP Red 1167A, LP Red 1105A and LP Red 1544A. The melting points of these dyes are close to the mixing and processing temperatures. None of the film samples proved to be laser-markable at 355 or at 532 nm.

### Comparative experiment F

Analogously to the method of Example II, at 100°C compositions were made in PE-LLD of 0.1 wt.% LP Red 502A, and each time 0.2 wt% LP Red 974A, LP Red 1110A, LP Red 1128A, LP Red 1133A, LP Red 983A, LP Red 1167A, LP Red 1105A, LP Red 1544A, LP Red 1548A. None of the film samples proved to be laser-markable at 355 or at 532 nm.

### Example VIII

Analogously to the method of Example II compositions were made of 1 wt. % LP Red 1128A in PP (Stamylan P® 312MNX40 of DSM, NL) and PE-HD (Stamylan HD® 9630 of DSM, NL) at 190°C. Films were made by moulding at 180ºC, 5 MPa, for 5 minutes. It was found that red markings were obtained on the yellow film samples by irradiation with laser light of 355 or of 532 nm.

### Comparative experiment G

Analogously to the method of Example II and Example VIII compositions were made of 0.2 wt.% LP Red 1128A in PP and PE-HD at 190°C. The film samples proved to be not laser-markable at 355 or at 532 nm.

### Example IX

A powder resin binder composition containing 90 parts by weight of Uracros® P3125 (an unsaturated polyester resin, DSM, NL), 10 parts by weight of isophorone diisocyanate (IPDI trimer) was mixed with 5 wt.% LP Red 1131 A on resin base in a Brabender kneader at 70°C and 50 rpm. After grinding and sieving (90 µm) the composition was cured on a metal plate in an oven at 100°C, for 48 hours under reduced pressure, so that a clear yellow coating was obtained.

It was found that a red marking was obtained on the yellow sample by irradiation with laser light of 355 or of 532 nm.

### Comparative experiment H

The composition of Example IX was applied in an analogous way on a plate and cured at a temperature of 170°C. The yellow sample proved not to be laser-markable with sufficient contrast at 355 or at 532 nm; a slight orange discoloration was observed.

### Example X

The cured coating from Example IX was ground and sieved over a 90 µm screen. The yellow powder was mixed with PE-LLD, in a weight ratio of 21/79, in a way analogous to Example II. It was found that a red marking with high contrast was obtained on the yellow sample by irradiation with laser light of 355 or of 532 nm.

### Example XI

Analogously to Example X a composition was made containing 5 wt.% of the yellow powder in PE-LLD resulting in a film with 0.25 wt.% of LP Red 1131A. irradiation with laser light of 355 or 532 nm did not result in markings with good contrast. The sample was also irradiated with laser light of 440 nm from a Coherent Infinity Nd:YAG laser, Q-switched with frequency doubling and tripling, and equipped with an XPO. Now a red marking with high contrast was obtained on the yellow sample, probably because the wavelength of the laser light better corresponds to the absorption maximum of the pigment.

### Comparative experiment I

Analogously to Example II a composition was made at 100°C, but with 0.25 wt.% LP Red 1131 A. The resulting yellow film proved to be not iaser-markabie at 355, 532 or 440 nm (see Example XI). No particles could be observed with the aid of optical microscopy.

### Example XII

An UV-curable powder resin binder composition containing 442 g Uracros® P3125 (DSM, NL), 49 g Uracros® P3307 (a vinyl ether crosslinker, DSM, NL), 3 g Irgacure® 2959 (a photoinitiator, Ciba, CH) and 3 g LP Red 502A was prepared by mixing the components on a Prism 16 mm twinscrew extruder at 70°C and 200 rpm, followed by grinding and sieving using a 90 µm screen. An approx. 50 micrometer thick layer was sprayed onto an aluminium plate, was melted at approx. 100°C by means of IR radiation, and subsequently cured by irradiation with a Fusion H UV lamp (approx. 1 J/cm²). This resulted in a clear yellow coating.

Upon irradiation with laser light of different sources and wavelengths the following was observed:
a) When irradiating the coating with a Haas VectorMark VM4 lamp-pumped Nd:YAG laser of Haas-Laser (DE), wavelength 532 nm; 3W monomode; a light-red marking was obtained. For this the following settings were used: power 80% of the maximum power; pulse frequency 3 kHz; 300 dpi (in x-and y-directions), 1.5 cm out of focus. The beam diameter was approx. 80 micrometer (in focus);
b) Irradiation with laser light of wavelength 532 nm (diode-pumped Nd:YAG laser, Haas Laser (DE)); 2 cm out of focus, 99% of the maximum power 3 kHz, beam diameter approx. 50 micrometer (in focus) resulted in an orange-red marking when writing a block of approx. 3 x 3 mm with a resolution of 300 dpi, 600 dpi or 1200 dpi in the x- as well as the y-direction. When writing a few lines with a resolution of 300 dpi and otherwise the same settings orange-red letters were written on the yellow background;
c) lamp-pumped Nd:YAG laser of Haas-Laser (DE) with a wavelength 1064 nm, 15 W, monomode. The settings used were 99% of the maximum power; pulse frequency 3 kHz; 300 dpi in the x- as well as the y-direction, both in focus and up to approx. 2 cm out of focus. The beam diameter was approx. 85 micrometer in focus. No colour change was observed: the coating ablated.

## Claims

1. A polymer composition with improved laser markability, containing a polymer matrix material and at least one radiation-sensitive dye, **characterised in that** the radiation-sensitive dye can change colour via a photo-thermal process by irradiation with laser light and is present in concentrated form in separate domains.

2. The polymer composition according to claim 1, **characterised in that** the domains consist substantially of dye.

3. The polymer composition according to claim 1, **characterised in that** the domains consist of encapsulated dye particles.

4. The polymer composition according to claim 1, **characterised in that** the domains consist of dispersed particles of a component that is not miscible with the polymer matrix material, in which the dye is present in concentrated form.

5. The polymer composition according to any one of claims 1-4, **characterised in that** the dye is present in domains with an average size of approximately 0.01-200 µm.

6. The polymer composition according to claim 5, **characterised in that** the average size is approximately 0.1-90 µm.

7. The polymer composition according to any one of claims 1-6, **characterised in that** the dye is a latent pigment.

8. The polymer composition according to any one of claims 1-7, **characterised in that** the polymer matrix material is a radiation-curable polymer.

9. The polymer composition according to claim 8,-**characterised in that** the polymer matrix material is a UV-curable polymer.

10. The polymer composition according to either of claims 8-9, **characterised in that** the polymer matrix material is a UV-curable powder paint binder.

11. A method for preparing a polymer composition with improved laser markability according to any one of claims 1-10 by mixing the polymer matrix material and the radiation-sensitive dye, under such time and temperature conditions that the dye does not change colour in a thermally irreversible way, **characterised in that** dissolution of the normally soluble dye in the polymer matrix material is inhibited, so that this dye is ultimately concentrated in separate domains.

12. The method according to claim 11, **characterised in that** more dye is added than is soluble in the polymer matrix material under the conditions of use and/or processing.

13. The method according to claim 11. **characterised in that** the mixing takes place in the melt phase of the polymer matrix material.

14. The method according to any one of claims 11-13, **characterised in that** the dye concentration and the processing conditions are chosen so that during cooling to the conditions of use the dye separates, for example as a result of crystallisation, into separate domains.

15. The method according to claim 11, **characterised in that** the dye is present in the form of encapsulated particles.

16. The method according to claim 11, **characterised in that** during the mixing of the dye and the polymer matrix material, phase separation of a component that is not miscible with the polymer matrix material results in the formation of dispersed particles, in which the dye is present in concentrated form.

17. A product containing the polymer composition according to any one of claims 1-10.

18. The product according to claim 17, **characterised in that** it is wholly or partially provided with a coating containing the polymer composition according to any one of claims 1-10.

19. A method for applying a laser-markable coating on a substrate by curing of a powder paint containing the polymer composition according any to one of claims 1-10 with the aid of UV radiation.

20. A method for applying a marking on a product by irradiating a surface with laser light, **characterised in that** the product consists at least at the surface area where the marking is applied of the polymer composition according to any one of claims 1-10 or obtained with the method according to any one of claims 11-16.

21. A marked product obtained with the method according to claim 20.

## Patentansprüche

1. Polymerzusammensetzung mit verbesserter Lasermarkierbarkeit, enthaltend ein Polymermatrixmaterial und mindestens einen strahlungssensitiven Farbstoff, **dadurch gekennzeichnet, dass** der strahlungssensitive Farbstoff seine Farbe über einen photothermischen Prozess durch Bestrahlung mit Laserlicht verändern kann und in angereicherter Form in separaten Domänen vorliegt.

2. Polymerzusammensetzung nach Anspruch 1, **dadurch gekennzeichnet, dass** die Domänen im Wesentlichen aus Farbstoff bestehen.

3. Polymerzusammensetzung nach Anspruch 1, **dadurch gekennzeichnet, dass** die Domänen aus verkapselten Farbstoffpartikeln bestehen.

4. Polymerzusammensetzung nach Anspruch 1, **dadurch gekennzeichnet, dass** die Domänen aus dispergierten Partikeln eines Bestandteils bestehen, der mit dem Polymermatrixmaterial, in welchem der Farbstoff in angereicherter Form vorliegt, nicht mischbar ist.

5. Polymerzusammensetzung nach einem der Ansprüche 1-4, **dadurch gekennzeichnet, dass** der Farbstoff in Domänen mit einer mittleren Größe von ungefähr 0,01-200 µm vorliegt.

6. Polymerzusammensetzung nach Anspruch 5, **dadurch gekennzeichnet, dass** die mittlere Größe ungefähr 0,1-90 µm beträgt.

7. Polymerzusammensetzung nach einem der Ansprüche 1-6, **dadurch gekennzeichnet, dass** der Farbstoff ein Latentpigment ist.

8. Polymerzusammensetzung nach einem der Ansprüche 1-7, **dadurch gekennzeichnet, dass** das Polymermatrixmaterial ein durch Strahlung härtbares Polymer ist.

9. Polymerzusammensetzung nach Anspruch 8, **dadurch gekennzeichnet, dass** das Polymermatrixmaterial ein UV-härtbares Polymer ist.

10. Polymerzusammensetzung nach einem der beiden Ansprüche 8-9, **dadurch gekennzeichnet, dass** das Polymermatrixmaterial ein UV-härtbares Pulverlack-Bindemittel ist.

11. Verfahren zur Herstellung einer Polymerzusammensetzung mit verbesserter Lasermarkierbarkeit nach einem der Ansprüche 1-10 durch Mischen des Polymermatrixmaterials und des strahlungssensitiven Farbstoffs unter solchen Zeit- und Temperaturbedingungen, dass der Farbstoff seine Farbe nicht auf eine thermisch irreversible Weise verändert, **dadurch gekennzeichnet, dass** die Auflösung des normalerweise löslichen Farbstoffs in dem Polymermatrixmaterial inhibiert ist, so dass dieser Farbstoff letztlich in separaten Domänen angereichert wird.

12. Verfahren nach Anspruch 11, **dadurch gekennzeichnet, dass** mehr Farbstoff zugegeben wird, als unter den Anwendungs- und/oder Verarbeitungsbedingungen in dem Polymermatrixmaterial löslich ist.

13. Verfahren nach Anspruch 11, **dadurch gekennzeichnet, dass** das Mischen in der geschmolzenen Phase des Polymermatrixmaterials durchgeführt wird.

14. Verfahren nach einem der Ansprüche 11-13, **dadurch gekennzeichnet, dass** die Farbstoffkonzentration und die Verarbeitungsbedingungen so gewählt werden, dass sich der Farbstoff während des Abkühlens auf die Verwendungsbedingungen, zum Beispiel als Folge einer Kristallisation, in separate Domänen abtrennt.

15. Verfahren nach Anspruch 11, **dadurch gekennzeichnet, dass** der Farbstoff in der Form von verkapselten Partikeln vorliegt.

16. Verfahren nach Anspruch 11, **dadurch gekennzeichnet, dass** während des Mischens des Farbstoffs und des Polymermatrixmaterials eine Phasentrennung eines Bestandteils, der mit dem Polymermatrixmaterial nicht mischbar ist, zu der Bildung von dispergierten Partikeln führt, wobei der Farbstoff in angereicherter Form vorliegt.

17. Produkt, enthaltend die Polymerzusammensetzung nach einem der Ansprüche 1-10.

18. Produkt nach Anspruch 17, **dadurch gekennzeichnet, dass** es vollständig oder teilweise mit einer Beschichtung versehen ist, welche die Polymerzusammensetzung nach einem der Ansprüche 1-10 umfasst.

19. Verfahren zum Aufbringen einer lasermarkierbaren Beschichtung auf einem Substrat durch Härten eines Pulverlacks, der die Polymerzusammensetzung nach einem der Ansprüche 1-10 enthält, mit Hilfe von UV-Strahlung.

20. Verfahren zum Aufbringen einer Markierung auf einem Produkt durch Bestrahlen einer Oberfläche mit Laserlicht, **dadurch gekennzeichnet, dass** das Produkt mindestens auf der Oberfläche, auf der die Markierung aufgebracht wird, aus der Polymerzusammensetzung nach einem der Ansprüche 1-10 besteht oder mit dem Verfahren nach einem der Ansprüche 11-16 erhalten wird.

21. Markiertes Produkt, erhalten mit dem Verfahren nach Anspruch 20.

## Revendications

1. Composition de polymère avec capacité de marquage laser améliorée, contenant un matériau de matrice de polymère et au moins un colorant sensible au rayonnement, **caractérisée en ce que** le colorant sensible au rayonnement peut changer de couleur via un processus photo-thermique par irradiation avec une lumière laser et est présent sous forme concentrée dans des domaines séparés.

2. Composition de polymère selon la revendication 1, **caractérisée en ce que** les domaines sont constitués substantiellement de colorant.

3. Composition de polymère selon la revendication 1, **caractérisée en ce que** les domaines sont constitués de particules de colorant encapsulées.

4. Composition de polymère selon la revendication 1, **caractérisée en ce que** les domaines sont constitués de particules dispersées d'un composant qui n'est pas miscible avec le matériau de matrice de polymère, dans lequel le colorant est présent sous forme concentrée.

5. Composition de polymère selon l'une quelconque des revendications 1-4, **caractérisée en ce que** le colorant est présent dans des domaines avec une taille moyenne d'approximativement 0,01-200 µm.

6. Composition de polymère selon la revendication 5, **caractérisée en ce que** la taille moyenne est d'approximativement 0,1-90 µm.

7. Composition de polymère selon l'une quelconque des revendications 1-6, **caractérisée en ce que** le colorant est un pigment latent.

8. Composition de polymère selon l'une quelconque des revendications 1-7, **caractérisée en ce que** le matériau de matrice de polymère est un polymère durcissable par rayonnement.

9. Composition de polymère selon la revendication 8, **caractérisée en ce que** le matériau de matrice de polymère est un polymère durcissable par UV.

10. Composition de polymère selon l'une des revendications 8-9, **caractérisée en ce que** le matériau de matrice de polymère est un liant de peinture en poudre durcissable par UV.

11. Procédé pour préparer une composition de polymère avec capacité de marquage laser améliorée selon l'une quelconque des revendications 1-10 en mélangeant le matériau de matrice de polymère et le colorant sensible au rayonnement, sous des conditions de temps et de température qui sont telles que le colorant ne change pas de couleur d'une façon irréversible thermiquement, **caractérisé en ce que** la dissolution du colorant normalement soluble dans le matériau de matrice de polymère est inhibée, de telle sorte que ce colorant, dans sa phase ultime, soit concentré dans des domaines séparés.

12. Procédé selon la revendication 11, **caractérisé en ce qu'**il y a plus de colorant ajouté que ce qui est soluble dans le matériau de matrice de polymère sous les conditions d'utilisation et/ou de traitement.

13. Procédé selon la revendication 11, **caractérisé en ce que** le mélange s'effectue dans la phase fondue du matériau de matrice de polymère.

14. Procédé selon l'une quelconque des revendications 11-13, **caractérisé en ce que** la concentration de colorant et les conditions de traitement sont choisies de telle sorte que pendant le refroidissement jusqu'aux conditions d'utilisation, le colorant se sépare, par exemple en tant que résultat d'une cristallisation, selon des domaines séparés.

15. Procédé selon la revendication 11, **caractérisé en ce que** le colorant est présent sous la forme de particules encapsulées.

16. Procédé selon la revendication 11, **caractérisé en ce que**, pendant le mélange du colorant et du matériau de matrice de polymère, la séparation de phase d'un composant qui n'est pas miscible avec le matériau de matrice de polymère conduit à la formation des particules dispersées, dans lequel le colorant est présent sous forme concentrée.

17. Produit contenant la composition de polymère selon l'une quelconque des revendications 1-10.

18. Produit selon la revendication 17, **caractérisé en ce qu'**il est produit dans sa totalité ou partiellement avec un revêtement contenant la composition de polymère selon l'une quelconque des revendications 1-10.

19. Procédé pour appliquer un revêtement avec capacité de marquage laser sur un substrat par cuisson d'un peinture en poudre contenant la composition de polymère selon l'une quelconque des revendications 1-10 à l'aide de rayonnement UV.

20. Procédé pour appliquer un marquage sur un produit par irradiation d'une surface avec une lumière laser, **caractérisé en ce que** le produit est constitué, au moins au niveau de la zone de surface où le marquage est appliqué, de la composition de polymère selon l'une quelconque des revendications 1-10 ou est obtenu avec le procédé selon l'une quelconque des revendications 11-16.

21. Produit marqué obtenu avec le procédé selon la revendication 20.
